**Europäisches Patentamt**

**European Patent Office**

**Office européen des brevets**

(19)

(11) Veröffentlichungsnummer : **0 361 183 B1**

(12) **EUROPÄISCHE PATENTSCHRIFT**

(45) Veröffentlichungstag der Patentschrift :
**09.12.92 Patentblatt 92/50**

(51) Int. Cl.⁵ : **F16K 11/06, F16K 31/44,**
**F16K 31/02**

(21) Anmeldenummer : **89116699.3**

(22) Anmeldetag : **09.09.89**

(54) **Schaltventil mit Keramik-Ventilelementen.**

(30) Priorität : **24.09.88 DE 3832481**

(43) Veröffentlichungstag der Anmeldung :
**04.04.90 Patentblatt 90/14**

(45) Bekanntmachung des Hinweises auf die
Patenterteilung :
**09.12.92 Patentblatt 92/50**

(84) Benannte Vertragsstaaten :
**DE FR GB IT NL SE**

(56) Entgegenhaltungen :
**DE-A- 3 539 316**
**GB-A- 898 565**
**US-A- 3 530 893**

(73) Patentinhaber : **ARMATURENFABRIK**
**HERMANN VOSS GMBH & CO.**
**Leiersmühle 2-6**
**W-5272 Wipperfürth (DE)**

(72) Erfinder : **Geiger, Karl Otto, Dipl.-Ing.**
**Seilerstrasse 40**
**W-5272 Wipperfürth (DE)**
Erfinder : **Schultes, Karlheinz, Dr.**
**Martin-Luther-Platz 17**
**W-5000 Köln 1 (DE)**
Erfinder : **Prüfer, Joachim, Dipl.-Ing.**
**Baumbergstrasse 104**
**W-5090 Leverkusen (DE)**
Erfinder : **Rösch, Volker, Dr.**
**Elsenborner Weg 37**
**W-4330 Mühlheim/Ruhr (DE)**

(74) Vertreter : **Patentanwälte Dr. Solf & Zapf**
**Schlossbleiche 20 Postfach 13 01 13**
**W-5600 Wuppertal 1 (DE)**

**Beschreibung**

Die vorliegende Erfindung betrifft ein Schaltventil zum Steuern von Druckmedien, insbesondere Druckluft, bestehend aus einem Ventilgehäuse mit einer Gehäusekammer, mindestens einem Druck-Eingangsanschluß und mindestens einem Ausgangsanschluß sowie aus einem ersten, ortsfesten Ventilelement und einem zweiten, scheibenförmigen, unter einer Anpreßkraft dichtend an einer Anlagefläche des ersten Ventilelementes anliegenden Ventilelement, wobei die Ventilelemente derartige Steueröffnungen und/oder Steuervertiefungen aufweisen und das zweite Ventilelement über ein Betätigungselement relativ zu dem ersten Ventilelement derart längsverschiebbar in der Gehäusekammer geführt ist, daß die Anschlüsse über die Steueröffnungen und/oder -vertiefungen zumindest paarweise miteinander verbindbar sind, und wobei zur Führung des zweiten Ventilelementes das Betätigungselement längsverschiebbar und bezogen auf seine Verschiebungsachse in radialer Richtung fest in der Gehäusekammer geführt und das zweite Ventilelement seitlich an dem Betätigungselement gehaltert ist sowie sich zur Erzeugung der Anpreßkraft federelastisch an dem Betätigungselement abstützt.

Aus der GB-A-898 565 ist ein derartiges Schaltventil bekannt, bei dem das das verschiebbare Ventilelement führende Betätigungselement als doppelt wirkender Druckluftkolben ausgebildet ist, wobei beidseitig des Ventilelementes jeweils ein Kolben in einer Bohrung des Gehäuses geführt ist, und zwar offensichtlich frei verdrehbar. Das verschiebbare Ventilelement liegt an einer Verschlußplatte des Gehäuses an, so daß diese Verschlußplatte praktisch ein ortsfestes Ventilelement bildet, welches mit dem verschiebbaren Element zum Schaltverbinden der Anschlüsse zusammenwirkt. Das verschiebbare Ventilelement besteht aus einer Scheibe aus PTFE. Dieses bekannte Schaltventil wird mit Druckluft betätigt, wozu beidseitig des Doppelkolbenelementes jeweils eine Druckkammer gebildet ist, wobei diese Druckkammern über Steueranschlüsse mit Druckluft beaufschlagbar sind. Derartige druckluftbetätigte Ventile sind nicht für alle Anwendungsfälle geeignet. Zudem erfordern sie einen relativ großen Aufwand für die Steuerung, da zusätzliche Druckluft-Steuerventile zur Beaufschlagung der Druckräume erforderlich sind.

Ein weiteres Schaltventil ist aus der DE-A-35 39 316 (Fig. 15) bekannt. Bei diesem als Schieberventil ausgebildeten Ventil sind zwei Keramik-Ventilelemente ortsfest und gegen Gehäusekanäle abgedichtet in der Gehäusekammer angeordnet. Ein drittes Ventilelement ist längsverschiebbar zwischen den beiden ortsfesten Ventilelementen angeordnet. Diese scheibenförmigen Keramik-Ventilelemente weisen extrem glatte Oberflächen auf, so daß durch Beaufschlagung mit einer Anpreßkraft aufgrund von Adhäsion eine Dichtwirkung zwischen den Ventilelementen erreicht wird, wobei diese aber dennoch gegeneinander verschiebbar sind. Die die Ventilelemente dichtend gegeneinanderpressende Anpreßkraft wird bei dem bekannten Schaltventil dadurch erzeugt, daß Spannklammern auf Schrägflächen der äußeren Ventilelemente sitzen, so daß durch mehr oder weniger weites Aufschieben der Spannklammern auf die äußeren Ventilelemente die Höhe der Anpreßkraft einstellbar ist. Die Verschiebung des zwischen den äußeren Ventilelementen angeordneten dritten Ventilelementes erfolgt mittels eines Schiebers, der im Bereich einer die ortsfesten Ventilelemente überragenden Stirnseite an dem Ventilelement anliegt, und die Rückstellbewegung erfolgt über eine auf der dem Schieber gegenüberliegenden Seite des Ventilelementes angeordnete Rückstellfeder. Aufgrund der vorgesehenen drei Ventilelemente und der zur Erzeugung der Anpreßkraft vorgesehenen Mittel sowie aufgrund der oben beschriebenen Betätigung des verschiebbaren Ventilelementes ist das bekannte Ventil konstruktiv sehr aufwendig sowie auch sehr groß und sperrig und damit für solche Anwendungsfälle nicht geeignet, bei denen nur ein beschränkter Montageraum für das Schaltventil zur Verfügung steht.

Weiterhin sind auch sogenannte Sitzventile bekannt, die allerdings gattungsgemäß unzutreffend sind, da ein Kolben dichtend mit einem Ventilsitz zusammenwirkt. Hierbei ist gegenüber den gattungsgemäßen Schieberventilen von Nachteil, daß der Systemdruck axial auf den Kolben wirkt, was bei auftretenden Druckstößen zu Undichtigkeiten, d.h. zu einem ungewollten Öffnen des Ventils, führen kann. Dies könnte nur durch Verwendung stärkerer Rückstellfedern vermieden werden, wobei aber dann von Nachteil ist, daß zur Überwindung der Rückstellfederkraft auch eine höhere Betätigungskraft erforderlich wäre.

Der vorliegenden Erfindung liegt die Aufgabe zugrunde, ein gattungsgemäßes Schaltventil zu schaffen, welches bei konstruktiv einfachem und kompakten Aufbau mit geringem Aufwand betätigt werden kann.

Erfindungsgemäß wird dies durch die kennzeichnenden Merkmale des Anspruchs 1 erreicht. Vorteilhafte Weiterbildungen der Erfindung sind in den abhängigen Unteransprüchen 2 bis 15 enthalten.

Das erfindungsgemäße Schaltventil wird somit elektromagnetisch betätigt, was im Vergleich zu einer Druckluftbetätigung sehr viel einfacher hinsichtlich der Ansteuerung ist, da anstatt von Steuerventilen lediglich einfache elektrische Schalter ausreichend sind. Das Ventil bildet zusammen mit dem Elektromagneten eine Einheit, so daß es sehr kompakt, und zwar in einer besonders vorteilhaften Ausführungsform der Erfindung auch einstückig, ausgebildet ist. Da hierbei erfindungsgemäß der Anker des Elektromagneten zusammen mit dem Betätigungselement und dem an diesem gehaltenen, verschiebbaren Ventilelement in einer gemeinsamen Druckkammer angeordnet sind, erübrigt sich vorteilhafterweise jegliche Abdichtung von sich bewegenden Teilen.

Die federelastische Abstützung des Ventilelementes an dem Betätigungselement ist erfindungsgemäß so ausgelegt, daß die Dichtfunktion zwischen den Ventilelementen auch gegen den von der Seite des ortsfesten Ventilelementes her anstehenden Druck stets gewährleistet bleibt. In einer Weiterbildung der Erfindung ist die Gehäusekammer druckmäßig mit einem der Eingangsanschlüsse oder einem der Ausgangsanschlüsse verbunden. Dies bedeutet, daß sich auch eine Abdichtung des verschiebbaren Ventilelementes gegen das Ventilgehäuse erübrigt. Zudem ist von entscheidendem Vorteil, daß der in der Gehäusekammer herrschende Druck das verschiebbare Ventilelement gegen das ortsfeste Ventilelement preßt, so daß die "normale", federkraftbedingte Anpreßkraft im Betriebszustand von dem in der Gehäusekammer herrschenden Druck noch unterstützt wird, was die Dichtwirkung zwischen den Ventilelementen vorteilhafterweise noch verbessert. Hierbei ist es zweckmäßig, die Gehäusekammer jeweils mit demjenigen Anschluß druckmäßig zu verbinden, an dem der jeweils höhere Druck ansteht bzw. zu erwarten ist. Üblicherweise kann dies entweder ein mit einer Druckmittelquelle zu verbindender Druckanschluß oder ein mit einem Verbraucher zu verbindender Verbraucheranschluß sein. Handelt es sich bei dem Verbraucher beispielsweise um Luftdruck-Stoßdämpfer oder dergleichen, so ist es erfindungsgemäß besonders zweckmäßig, die Gehäusekammer druckmäßig mit dem Verbraucher zu verbinden, da in diesem Fall Druckstöße auftreten können, die den Druck der Druckmittelquelle, der in der Regel etwa 7 bis 10 bar beträgt, übersteigen.

Anhand der Zeichnung soll im folgenden die Erfindung beispielhaft näher erläutert werden. Dabei zeigen:

Fig. 1 eine teilgeschnittene Seitenansicht einer ersten Ausführungsform eines erfindungsgemäßen Schaltventils in seiner Schließstellung,

Fig. 2 eine Draufsicht dieses Schaltventils in Pfeilrichtung II gemäß Fig. 1,

Fig. 3 eine Ansicht analog zu Fig. 1 des Bereichs III der Ventilelemente, jedoch in der Öffnungsstellung,

Fig. 4 einen Teil-Längsschnitt einer zweiten Ausführungsform eines erfindungsgemäßen Schaltventils wiederum in der Schließstellung,

Fig. 5 einen Schnitt durch den Bereich der Ventilelemente einer weiteren Ausführungsform eines erfindungsgemäßen Schaltventils in einer ersten Schaltstellung und

Fig. 6 eine Ansicht des Bereichs VI analog zu Fig. 5 in einer zweiten Schaltstellung des erfindungsgemäßen Schaltventils.

In den verschiedenen Figuren der Zeichnung sind gleiche Teile jeweils mit den gleichen Bezugsziffern bezeichnet.

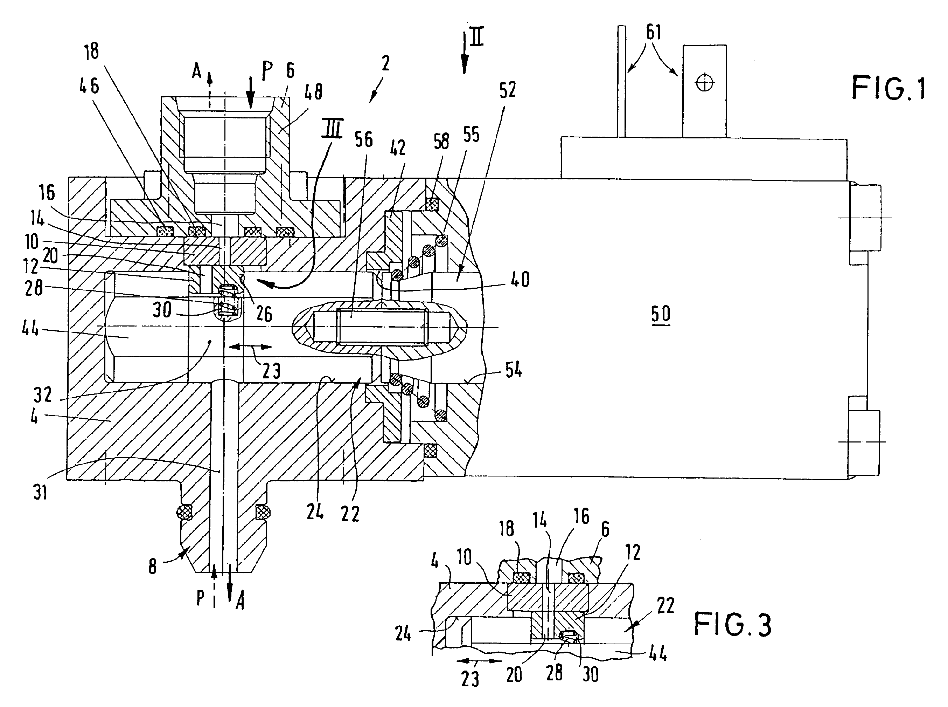

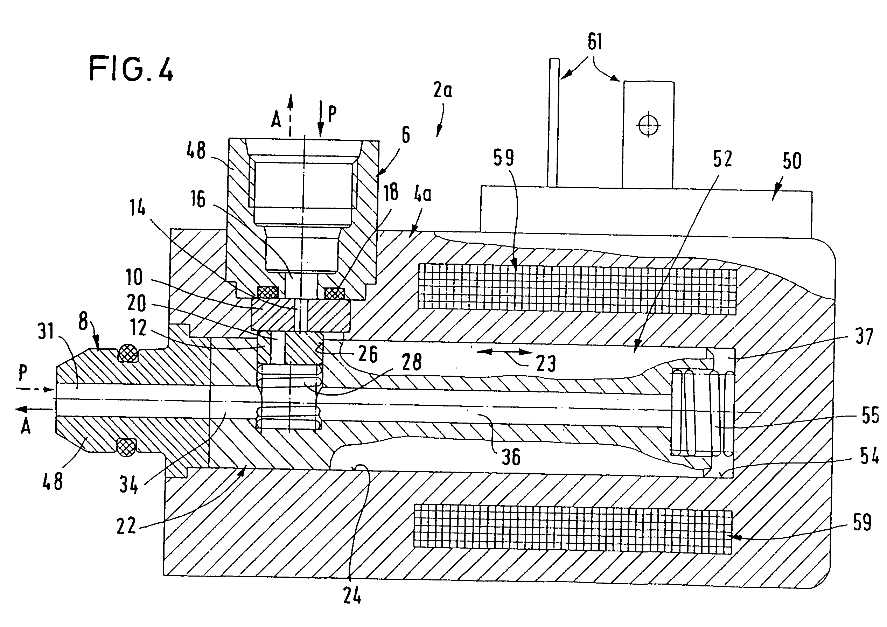

Ein erfindungsgemäßes Schaltventil 2 (Fig. 1 bis 3) bzw. 2a (Fig. 4) kann beispielsweise als 2/2-Wegeventil ausgebildet sein und besteht aus einem Ventilgehäuse 4 bzw. 4a mit zwei Anschlüssen 6 und 8, wobei je nach Anwendungsfall entweder der Anschluß 6 mit einer Druckmittelquelle P und der Anschluß 8 mit einem Verbraucher A verbunden ist (in Fig. 1 und 4 anhand von Pfeilen eingezeichnet) oder aber umgekehrt (anhand von gestrichelten Pfeilen eingezeichnet). In einer Gehäusekammer sind zwei scheibenförmige Ventilelemente 10, 12 angeordnet, die unter einer Anpreßkraft dichtend aufeinanderliegen. Die Ventilelemente 10, 12 bestehen vorzugsweise aus Keramikmaterial, und zwar insbesondere aus Aluminiumoxydkeramik. Das eine Ventilelement 10 ist ortsfest in der Gehäusekammer gehaltert, während das andere Ventilelement 12 relativ zu dem ersten Ventilelement 10 längsverschiebbar geführt ist. Das ortsfeste Ventilelement 10 besitzt eine Steueröffnung 14, die gegen einen Kanal 16 des Anschlusses 6 über eine Dichtung 18 abgedichtet ist. Das verschiebbare Ventilelement 12 besitzt ebenfalls eine Steueröffnung 20 und ist über ein Betätigungselement 22 derart verschiebbar geführt, daß die beiden Anschlüsse 6 und 8 über die Steueröffnungen 14 und 20 der Ventilelemente 10 und 12 miteinander verbindbar sind. In Fig. 1 ist die Schließstellung dargestellt, während Fig. 3 die Öffnungsstellung zeigt, in der die Steueröffnungen 14 und 20 miteinander fluchtend angeordnet sind.

Das Betätigungselement 22 ist axial, d.h. in Doppelpfeilrichtung 23 längsverschiebbar und - bezogen auf seine Verschiebungsachse - in radialer Richtung fest in dem Ventilgehäuse 4, 4a geführt. Vereinfacht gesagt ist das Betätigungselement 22 "axialfest" geführt. Das verschiebbare Ventilelement 12 ist seitlich an dem Betätigungselement 22 gehalten und stützt sich zur Erzeugung der Anpreßkraft federelastisch an dem Betätigungselement 22 ab. Hierzu ist das Betätigungselement 22 vorteilhafterweise kolbenartig in einem als Führungsbohrung 24 ausgebildeten Bereich der Gehäusekammer geführt. Das Betätigungselement 22 dient somit als Hilfskolben, an dem das eigentliche Ventilelement 12 gehalten ist. Der Hilfskolben bzw. das Betätigungselement 22 übernimmt dabei keine wesentliche Dichtfunktion, sondern die Dichtwirkung wird durch die Ventilelemente 10 und 12 erreicht. Es ist vorteilhaft, wenn das verschiebbare Ventilelement 12 in axialer Richtung formschlüssig in einer Aufnahmevertiefung 26 des Betätigungselementes 22 sitzt. Dabei ist das Betätigungselement 22 vorzugsweise in axialer Richtung beidseitig des Ventilelements 12 bzw. der Aufnahmevertiefung 26, d.h. axial sowohl vor als auch hinter dem Ventilelement 12, "axialfest" in der Führungsbohrung 24 geführt. Hierdurch kann sich das Ventilelement 12 federelastisch an dem Betätigungselement 22 abstützen, wozu zwischen dem verschiebbaren Ventilelement 12 und dem Betätigungselement 22 eine vorgespannte, die Anpreßkraft erzeugende, vorzugsweise als Schraubenfeder ausgebildete Druckfeder 28 angeordnet ist. In dem Ausführungsbeispiel der Erfindung nach den Fig. 1 bis 3 sitzt die Druckfeder 28 in einander gegenüberliegenden Aufnahmevertiefungen 30 des Ventilelementes 12 und des Betätigungselementes 22.

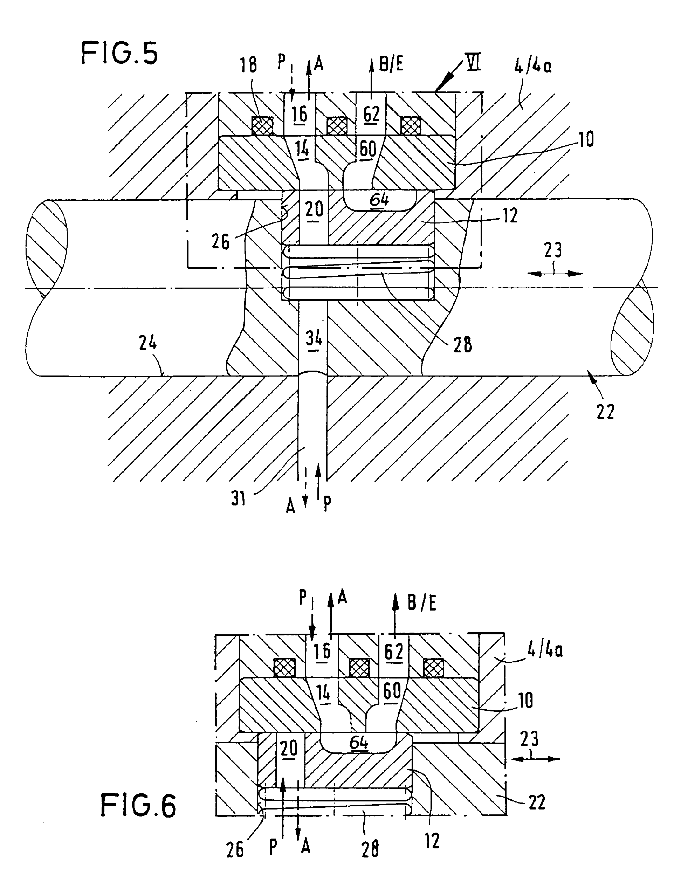

Vorzugsweise ist die Steueröffnung 20 des verschiebbaren Ventilelementes 12 über einen Kanal des Betätigungselementes 22 mit einem der Anschlüsse 6, 8, und zwar in den dargestellten Ausführungsbeispielen mit einem Kanal 31 des Anschlusses 8, verbunden. Gemäß Fig. 1 bis 3 ist der Kanal des Betätigungselementes 22 als Ringkanal 32 ausgebildet. Dieser Ringkanal 32 bildet gleichzeitig auch die Aufnahmevertiefung 26, in der das verschiebbare Ventilelement 12 sitzt. In den Ausführungsbeispielen nach Fig. 4 und 5 ist der Kanal des Betätigungselementes 22 dagegen als Durchgangskanal 34 ausgebildet, der sich radial (Fig. 5) oder aber radial und axial (Fig. 4) durch das Betätigungselement 22 erstreckt. Im Ausführungsbeispiel nach Fig. 4 schließt sich folglich der Anschluß 8 axial an das Betätigungselement 22 an. Dabei ist es zudem vorteilhaft, wenn das Betätigungselement 22 auch einen axialen Kanalabschnitt 36 aufweist, der die Steueröffnung 20 des Ventilelementes 12 bzw. den Anschluß 8 auch mit einem auf der dem Anschluß 8 gegenüberliegenden Seite des Betätigungselementes 22 in dem Gehäuse 4a gebildeten Hohlraum 37 verbindet, da hierdurch beidseitig im axialen Anschluß an das Betätigungselement 22 stets ein Druckgleichgewicht gewährleistet ist, so daß ein ungewolltes, druckbedingtes, axiales Verschieben des Betätigungselementes 22 vorteilhafterweise vermieden wird.

Insbesondere im Ausführungsbeispiel nach Fig. 1 bis 3, wobei das verschiebbare Ventilelement 12 in dem Ringkanal 32 und die Druckfeder 28 in den Aufnahmevertiefungen 30 angeordnet sind, ist es vorteilhaft, wenn das Betätigungselement 22 verdrehfest in dem Gehäuse 4 geführt ist. Hierzu weist das Betätigungselement 22 einen sich von der Kreisform unterscheidenden Querschnitt auf und ist in einer mit der Führungsbohrung 24 fluchtenden, in ihrer Form an den Querschnitt des Betätigungselementes 22 angepaßten Durchgangsöffnung 40 einer in dem Gehäuse 4 ihrerseits verdrehfest gehalterten Führungsscheibe 42 geführt. Wie dargestellt, kann das Betätigungselement 22 zweckmäßigerweise einen kreisförmigen Querschnitt mit mindestens einer seitlichen, sekantenartigen Abflachung 44 aufweisen.

Gemäß Fig. 1 ist der Anschluß 8 erfindungsgemäß einstückig mit dem Ventilgehäuse 4 ausgebildet.

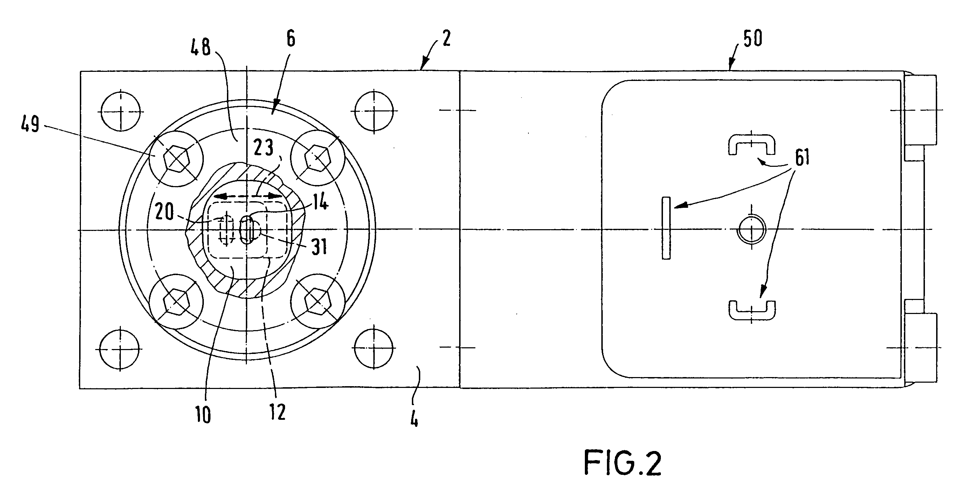

Der Anschluß 6 dagegen ist als mit dem Ventilgehäuse 4 über eine Dichtung 46 verbundenes Anschlußstück 48 (Anschlußflansch) ausgebildet. Dieses Anschlußstück 48 ist im Ausführungsbeispiel gemäß Fig. 1 bis 3 über Schraubverbindungen 49 (siehe Fig. 2) an dem Gehäuse 4 befestigt. Gemäß Fig. 4 sind ebenfalls Anschlußstücke 48 vorgesehen, die jedoch stoffschlüssig mit dem Ventilgehäuse 4a verbunden, insbesondere verschweißt oder verklebt sind. Aufgrund dieser stoffschlüssigen Verbindung erübrigt sich vorteilhafterweise auch eine zusätzliche Dichtung zwischen den Anschlußstücken 48 und dem Ventilgehäuse 4 bzw. 4a.

Erfindungsgemäß ist es nun weiterhin von besonderem Vorteil, wenn die Gehäusekammer druckmäßig mit einem der Anschlüsse 6, 8 einheitlich, d.h. verbunden ist. In den dargestellten Ausführungsbeispielen gemäß Fig. 1 bis 4 ist die Gehäusekammer druckmäßig mit dem Anschluß 8 einheitlich. Hierbei ist von Vorteil, daß der an dem Anschluß 8 jeweils anstehende Druck das bewegliche Ventilelement 12 beaufschlagt und in Richtung des ortsfesten Ventilelementes 10 preßt, was vorteilhafterweise die von der Druckfeder 28 erzeugte Anpreßkraft noch erhöht, wodurch auch die Dichtfunktion verbessert wird.

Das erfindungsgemäße Schaltventil 2, 2a wird erfindungsgemäß über einen Elektromagneten 50 betätigt. Hierzu ist das Betätigungselement 22 erfindungsgemäß als axiale Verlängerung eines Ankers 52 des Elektromagneten 50 ausgebildet, wobei von besonderem Vorteil ist, daß der Anker 52 in einem Ankerraum 54 angeordnet ist, der mit der Gehäusekammer einheitlich ausgebildet ist, was bedeutet, daß die Gehäusekammer und der Ankerraum 54 einen gemeinsamen Druckraum bilden, in dem der Anker 52 und das Betätigungselement 22 zusammen mit dem verschiebbaren Ventilelement 12 angeordnet sind. Dies bedeutet ferner, daß der Ankerraum 54 axial mit der Führungsbohrung 24 fluchtend angeordnet ist. Die Rückstellung des Ankers 52 und damit auch des Betätigungselementes 22 und des Ventilelementes 12 erfolgt über eine Rückstellfeder 55, die zwischen dem Anker 52 und dem Gehäuse des Elektromagneten 50 unter Vorspannung angeordnet ist.

Im Ausführungsbeispiel nach Fig. 1 bis 3 ist der Elektromagnet 50 ein gesondertes, mit dem Gehäuse 4 verbundenes Teil. Demzufolge ist auch der Anker 52 ein von dem Betätigungselement 22 getrenntes, insbesondere über eine Schraubverbindung 56 (Schraubbolzen) mit dem Betätigungselement 22 starr verbundenes Teil. Der Elektromagnet 50 ist in diesem Fall topfförmig ausgebildet und über eine Dichtung 58 mit dem Ventilgehäuse 4 verbunden, insbesondere verschraubt (angeflanscht).

Im erfindungsgemäßen Ausführungsbeispiel nach Fig. 4 ist der Elektromagnet 50 einstückig mit dem Ventilgehäuse 4a ausgebildet. Das Ventilgehäuse 4a ist hierbei vorzugsweise ein Gußgehäuse, wobei der Elektromagnet 50 mit Spule 59 und Anschlüssen 61 eingegossen ist. Hierbei ist vorzugsweise auch das Betätigungselement 22 einstückig mit dem Anker 52 ausgebildet.

In Fig. 5 und 6 sind Schnittansichten des Bereiches der Ventilelemente 10, 12 in einer Ausführung als 3/2-Wegeventil dargestellt. Diese Ausführung eignet sich zur Verwendung in Verbindung mit beiden der bereits beschriebenen Ausführungsformen, wobei das Gehäuse 4, 4a lediglich einen weiteren Anschluß (nicht dargestellt) aufweisen muß. Auch in den Fig. 5 und 6 bezeichnen gleiche Bezugsziffern jeweils gleiche, oben bereits erwähnte Teile. Hierauf wird daher nicht noch einmal Bezug genommen. Im Unterschied zu den bereits beschriebenen Ausführungsformen besitzt hier das ortsfeste Ventilelement 10 zusätzlich zu der Steueröffnung 14 eine weitere Steueröffnung 60, die über einen Kanal 62 mit dem nicht dargestellten weiteren Anschluß verbunden ist. Dieser Anschluß führt entweder zu einer Entlüftung E oder zu einem weiteren Verbraucher B. Das verschiebbare Ventilelement 12 besitzt zusätzlich zu der Steueröffnung 20 auf seiner an dem ortsfesten Ventilelement 10 anliegenden Seite eine Steuervertiefung 64, über die in der in Fig. 6 dargestellten Schaltstellung die Steueröffnungen 14 und 60 des Ventilelementes 10 miteinander verbunden werden können. In der anderen, in Fig. 5 dargestellten Schaltstellung sind der Druckanschluß P und der Verbraucheranschluß A über die Steueröffnungen 14 und 20 der Ventilelemente 10 und 12 miteinander verbunden.

Die Erfindung ist nicht auf die dargestellten und beschriebenen Ausführungsbeispiele beschränkt, sondern umfaßt auch alle im Sinne der Erfindung gleichwirkenden Ausführungsformen. Insbesondere ist die Erfindung nicht auf 2/2-Wegeventile und 3/2-Wegeventile beschränkt, sondern kann auch mit Vorteil für Ventile mit mehr Anschlüssen und/oder Schaltstellungen verwendet werden.

**Patentansprüche**

1. Schaltventil (2, 2a) zum Steuern von Druckmedien, insbesondere Druckluft, bestehend aus einem Ventilgehäuse (4,4a) mit einer Gehäusekammer, mindestens einem Druck-Eingangsanschluß (6/8) und mindestens einem Ausgangsanschluß (8/6) sowie aus einem ersten, ortsfesten Ventilelement (10) und einem zweiten, scheibenförmigen, unter einer Anpreßkraft dichtend an einer Anlagefläche des ersten Ventilelementes (10) anliegenden Ventilelement (12), wobei die Ventilelemente (10, 12) derartige Steueröffnungen (14,60; 20) und/oder Steuervertiefungen (64) aufweisen und das zweite Ventilelement (12) über ein Betätigungselement (22) relativ zu dem ersten Ventilelement (10) derart längsverschiebbar in der Gehäusekammer geführt ist, daß die Anschlüsse (6, 8) über die Steueröffnungen (20; 14,60) und/oder -vertiefungen (64) zumindest paarweise miteinander verbindbar sind, und wobei zur Führung des zweiten Ventilelementes (12) das Betätigungselement (22) längsverschiebbar und bezogen auf seine Verschiebungsachse in radialer Richtung fest in der Gehäusekammer geführt und das zweite Ventilelement (12) seitlich an dem Betätigungselement (22) gehaltert ist sowie sich zur Erzeugung der Anpreßkraft federelastisch an dem Betätigungselement (22) abstützt, **dadurch gekennzeichnet,** daß das Betätigungselement (22) in axialer Verlängerung mit einem Anker (52) eines Elektromagneten (50) verbunden ist, wobei der Anker (52) und das Betätigungselement (22) mit dem verschiebbaren Ventilelement (12) in einem gemeinsamen, von der Gehäusekammer und einem Ankerraum (54) des Elektromagneten (50) gebildeten Druckraum angeordnet sind.

2. Schaltventil nach Anspruch 1, **dadurch gekennzeichnet,** daß der Elektromagnet (50) topfförmig ausgebildet und abgedichtet mit dem Ventilgehäuse (4) verbunden, insbesondere verschraubt ist.

3. Schaltventil nach Anspruch 1, **dadurch gekennzeichnet,** daß der Elektromagnet (50) einstückig mit dem Ventilgehäuse (4a) ausgebildet ist.

4. Schaltventil nach einem oder mehreren der Ansprüche 1 bis 3, **dadurch gekennzeichnet,** daß das Betätigungselement (22) einstückig mit dem Anker (52) des Elektromagneten (50) ausgebildet oder mit dem Anker (52) insbesondere über eine Schraubverbindung (56) verbunden ist.

5. Schaltventil nach einem oder mehreren der Ansprüche 1 bis 4, **dadurch gekennzeichnet,** daß das erste Ventilelement (10) als separates, in der Gehäusekammer ortsfest gehaltertes, scheibenförmiges Teil ausgebildet ist, wobei beide Ventilelemente (10, 12) aus einem Keramikmaterial, insbesondere aus Aluminiumoxidkeramik, bestehen.

6. Schaltventil nach einem oder mehreren der Ansprüche 1 bis 5, **dadurch gekennzeichnet,** daß die Gehäusekammer druckmäßig mit einem der Eingangsanschlüsse (6/8) oder einem der Ausgangsanschlüsse (8/6) verbunden ist.

7. Schaltventil nach einem oder mehreren der Ansprüche 1 bis 6,
**dadurch gekennzeichnet**, daß das Betätigungselement (22) kolbenartig in einem als Führungsbohrung (24) ausgebildeten Bereich der Gehäusekammer geführt ist.

8. Schaltventil nach einem oder mehreren der Ansprüche 1 bis 7,
**dadurch gekennzeichnet**, daß das verschiebbare Ventilelement (12) in axialer Richtung formschlüssig in einer Aufnahmevertiefung (26) des Betätigungselementes (22) sitzt, wobei das Betätigungselement (22) in axialer Richtungvorzugsweise beidseitig des Ventilelementes (12) geführt ist.

9. Schaltventil nach einem oder mehreren der Ansprüche 1 bis 8,
**dadurch gekennzeichnet**, daß zwischen dem verschiebbaren Ventilelement (12) und dem Betätigungselement (22) eine vorgespannte, die Anpreßkraft erzeugende, vorzugsweise als Schraubenfeder ausgebildete Druckfeder (28) angeordnet ist.

10. Schaltventil nach Anspruch 9,
**dadurch gekennzeichnet**, daß die Druckfeder (28) in einander gegenüberliegenden Aufnahmevertiefungen (30) des Ventilelementes (12) und des Betätigungselementes (22) sitzt.

11. Schaltventil nach einem oder mehreren der Ansprüche 1 bis 10,
**dadurch gekennzeichnet**, daß die Steueröffnung (20) des verschiebbaren Ventilelementes (12) über einen Kanal (32, 34) des Betätigungselementes (22) mit einem der Anschlüsse (6, 8) verbunden ist.

12. Schaltventil nach Anspruch 11,
**dadurch gekennzeichnet**, daß der Kanal des Betätigungselementes (22) als Ringkanal (32) und/oder als Durchgangskanal (34) ausgebildet ist.

13. Schaltventil nach einem oder mehreren der Ansprüche 1 bis 12,
**dadurch gekennzeichnet**, daß das Betätigungselement (22) verdrehfest in der Gehäusekammer geführt ist, wozu es einen sich von der Kreisform unterscheidenden Querschnitt aufweist und in einer in ihrer Form an den Querschnitt des Betätigungselementes (22) angepaßten Durchgangsöffnung (40) einer in dem Gehäuse (4) verdrehfest gehaltenen Führungsscheibe (42) geführt ist.

14. Schaltventil nach einem oder mehreren der Ansprüche 1 bis 13,
**dadurch gekennzeichnet**, daß die Anschlüsse (6, 8) einstückig mit dem Ventilgehäuse (4, 4a) und/oder als mit dem Ventilgehäuse (4, 4a) dichtend verbundene Anschlußstücke (48) ausgebildet sind.

15. Schaltventil nach Anspruch 14,
**dadurch gekennzeichnet**, daß die Anschlußstücke (48) stoffschlüssig mit dem Ventilgehäuse (4, 4a) verbunden, insbesondere verschweißt oder verklebt, oder unter Zwischenlage einer Dichtung (46) verschraubt sind.

## Claims

1. Switch valve (2, 2a) for controlling pressure media, in particular compressed air, comprising a valve housing (4, 4a) with a housing chamber, at least one pressure input connection (6/8) and at least one output connection (8/6) as well as comprising a first, fixed valve element (10) and a second, disc-shaped valve element (12), bearing under a contact pressure in a sealing manner against a bearing surface of the first valve element (10), the valve elements (10, 12) having such control openings (14, 60; 20) and/or control recesses (64) and the second valve element (12) being guided in the housing chamber longitudinally displaceably in relation to the first valve element (10) by means of an actuating element (22) in such a way that the connections (6, 8) are able to be connected to one another, at least in pairs, via the control openings (20; 14, 60) and/or recesses (64), and, for guidance of the second valve element (12), the actuating element (22) being guided in the housing chamber longitudinally displaceably and, with respect to its displacement axis, fixedly in the radial direction, and the second valve element (12) being secured laterally on the actuating element (22) and supporting itself resiliently on the actuating element (22) for generating the contact pressure, characterised in that the actuating element (22) is connected in axial prolongation to an armature (52) of an electromagnet (50), the armature (52) and the actuating element (22) being arranged with the displaceable valve element (12) in a common pressure space, formed by the housing chamber and an armature space (54) of the electromagnet (50).

2. Switch valve according to Claim 1, characterised in that the electromagnet (50) is of a pot-shaped design and is connected, in particular screwed, to the valve housing (4) in a sealed-off manner.

3. Switch valve according to Claim 1, characterised in that the electromagnet (50) is formed in one piece with the valve housing (4a).

4. Switch valve according to one or more of Claims 1 to 3, characterised in that the actuating element (22) is formed in one piece with the armature (52) of the electromagnet (50) or is connected to the armature (52), in particular by means of a screw connection (56).

5. Switch valve according to one or more of Claims 1 to 4, characterised in that the first valve element (10) is designed as a separate disc-shaped part, secured fixedly in the housing chamber, both valve elements (10, 12) consisting of a ceramic material, in particular of aluminium-oxide ceramic.

6. Switch valve according to one or more of Claims 1 to 5, characterised in that the housing chamber is connected in terms of pressure to one of the input connections (6/8) or one of the output connections (8/6).

7. Switch valve according to one or more of Claims 1 to 6, characterised in that the actuating element (22) is guided in a piston-like manner in a region of the housing chamber designed as a guide bore (24).

8. Switch valve according to one or more of Claims 1 to 7, characterised in that the displaceable valve element (12) is seated in a form-fitting manner in the axial direction in a receiving recess (26) of the actuating element (22), the actuating element (22) being guided in the axial direction preferably on both sides of the valve element (12).

9. Switch valve according to one or more of Claims 1 to 8, characterised in that a prestressed compression spring (28), generating the contact pressure and preferably designed as a helical spring, is arranged between the displaceable valve element (12) and the actuating element (22).

10. Switch valve according to Claim 9, characterised in that the compression spring (28) is seated in mutually opposite receiving recesses (30) of the valve element (12) and of the actuating element (22).

11. Switch valve according to one or more of Claims 1 to 10, characterised in that the control opening (20) of the displaceable valve element (12) is connected via a channel (32, 34) of the actuating element (22) to one of the connections (6, 8).

12. Switch valve according to Claim 11, characterised in that the channel of the actuating element (22) is designed as an annular channel (32) and/or as a through-channel (34).

13. Switch valve according to one or more of Claims 1 to 12, characterised in that the actuating element (22) is guided torsion-resistantly in the housing chamber, for which purpose it has a cross-section other than circular and is guided in a through-opening (40) of a guide disc (42) held torsion-resistantly in the housing (4), which opening is adapted in its shape to the cross-section of the actuating element (22).

14. Switch valve according to one or more of Claims 1 to 13, characterised in that the connections (6, 8) are formed in one piece with the valve housing (4, 4a) and/or as connection pieces (48) connected to the valve housing (4, 4a) in a sealing manner.

15. Switch valve according to Claim 14, characterised in that the connection pieces (48) are integrally connected, in particular welded or adhesively bonded, to the valve housing (4, 4a), or are screwed to it with a seal (46) interposed.

**Revendications**

1. Soupape de commande (2, 2a) pour commander des agents de pression, en particulier de l'air comprimé, comprenant un boîtier (4, 4a) avec une chambre, au moins une connexion d'entrée de la pression (6/8), au moins une connexion de sortie de la pression (8/6), ainsi qu'au moins un premier élément de soupape fixe (10) et un deuxième élément de soupape (12) en forme de disque qui, sous l'influence d'une force de pression, est appliqué avec étanchéité, sur une face d'application du premier élément de soupape (10), ces éléments (10, 12) présentent des ouvertures (14, 60 ; 20) et/ou cavités (64) de commande, le deuxième élément (12) étant guidé dans la chambre de boîtier de manière à pouvoir être déplacé dans la direction longitudinale par rapport au premier élément (10), au moyen d'un organe d'actionnement (22), de manière à ce que les connexions (6, 8) puissent être reliées au moins deux par deux grâce aux ouvertures (20 ; 14, 60) et/ou cavités (64) de commande, l'organe d'actionnement (22) étant guidé de manière à pouvoir se déplacer dans la direction longitudinale dans la chambre de boîtier et de manière fixe dans la direction radiale par rapport à son axe de mouvement, en vue de guider le deuxième élément de soupape (12), celui-ci étant fixé latéralement sur l'organe d'actionnement (22) et en appui élastique sur celui-ci pour engendrer la force de pression,

caractérisée en ce que l'organe d'actionnement (22) est réalisé en tant que prolongement axial de la culasse (52) d'un électro-aimant (50), la culasse (52) et l'organe d'actionnement (22) étant disposés, avec l'élément de soupape mobile (12), dans une chambre de pression commune, formée par la chambre de boîtier et une chambre de culasse (54) de l'électro-aimant (50).

2. Soupape de commande selon la revendication 1, caractérisée par le fait que l'électro-aimant (50) a la forme d'une marmite et est relié de manière étanche, en particulier par vissage, au boîtier de soupape (4).

3. Soupape de commande selon la revendication 1, caractérisée par le fait que l'électro-aimant (50) est venu d'une pièce avec le boîtier de soupape (4a).

4. Soupape de commande selon l'une ou plusieurs des revendications 1 à 3,
caractérisée par le fait que l'organe d'actionnement (22) est venu d'une pièce avec la culasse (52) de l'électro-aimant (50) ou relié à la culasse (52) en particulier par une connexion à vis (56).

5. Soupape de commande selon l'une ou plusieurs des revendications 1 à 4,
caractérisée par le fait que le premier élément de soupape (10) est une pièce séparée en forme de disque, fixée dans la chambre de boîtier, les deux éléments de soupape (10, 12) étant réalisés en une matière céramique, en particulier en une céramique à oxyde d'aluminium.

6. Soupape de commande selon l'une ou plusieurs des revendications 1 à 5,
caractérisée par le fait que la chambre de boîtier est reliée en pression à l'une des connexions d'entrée (6/8) ou l'une des connexions de sortie (8/6).

7. Soupape de commande selon l'une ou plusieurs des revendications 1 à 6,
caractérisée par le fait que l'organe d'actionnement (22) est guidé, à la manière d'un piston, dans une région (24) de la chambre réalisée pour servir d'alésage de guidage.

8. Soupape de commande selon l'une ou plusieurs des revendications 1 à 7,
caractérisée par le fait que l'élément mobile (12) est disposé sans jeu axial dans une cavité de réception (26) de l'organe d'actionnement (22), l'organe d'actionnement (22) étant guidé dans la direction axiale, de préférence des deux côtés de l'élément (12).

9. Soupape de commande selon l'une ou pusieurs des revendications 1 à 8,
caractérisée par le fait qu'entre l'élément de soupape mobile (12) et l'organe d'actionnement (22) il est prévu un ressort de pression (28) pré-tendu qui engendre la force de pression et a de préférence la forme d'un ressort hélicoïdal.

10. Soupape de commande selon la revendication 9, caractérisée par le fait que le ressort de pression (28) est disposé dans des cavités de réception (30) de l'élément de soupape (12) et de l'organe d'actionnement (22) disposées en regard.

11. Soupape de commande selon l'une ou plusieurs des revendications 1 à 10,
caractérisée par le fait que l'ouverture de commande (20) de l'élément mobile (12) est reliée à une des connexions (6, 8) au moyen d'un canal (32, 34) de l'élément d'actionnement (22).

12. Soupape de commande selon la revendication 11,
caractérisée par le fait que le canal de l'organe d'actionnement (22) a la forme d'un canal annulaire (32) et/ou d'un canal à deux orifices (34).

13. Soupape de commande selon l'une ou plusieurs des revendications 1 à 12,
caractérisée par le fait que l'organe d'actionnement (22) est guidé avec résistance à la torsion dans la chambre de boîtier, possédant à cet effet une section transversale différente d'un cercle et est guidé dans une ouverture traversante (40) d'un disque de guidage (42) maintenu dans le boîtier (4) de manière à résister à la torsion, la forme de cette ouverture traversante étant adaptée à la section transversale de l'organe d'actionnement (22).

14. Soupape de commande selon l'une ou plusieurs des revendications 1 à 13,
caractérisée par le fait que les connexions (6, 8) sont venues d'une pièce avec le boîtier de soupape (4, 4a) et/ou ont la forme de pièces (48), rapportées de manière étanche sur le boîtier (4, 4a).

15. Soupape de commande selon la revendication 14,
caractérisée par le fait que les pièces rapportées (48) sont reliées au boîtier (4, 4a) par matière interposée, en particulier par soudure ou collage ou bien par vissage, en intercalant un joint (46).

FIG.1

FIG.3

EP 0 361 183 B1

FIG.2

EP 0 361 183 B1

# FIG.4

EP 0 361 183 B1

FIG.5

FIG.6